# EUROPEAN PATENT SPECIFICATION

(11) **EP 2 140 634 B1**
(45) Date of publication and mention of the grant of the patent: **22.04.2015**
(21) Application number: 08746597.7
(22) Date of filing: 23.04.2008
(51) Int. Cl.: H04W 36/00

(54) **RADIO LINK AND HANDOVER FAILURE HANDLING**
HANDHABUNG VON FEHLGESCHLAGENER FUNKVERBINDUNG UND ÜBERGABE
GESTION D'ÉCHEC DE LIAISON RADIO ET DE TRANSFERT

(30) Priority: 23.04.2007 US 913316 P; 18.06.2007 US 944542 P
(43) Date of publication of application: 06.01.2010
(60) Divisional application: 12169682.7
(73) Proprietor: InterDigital Technology Corporation, Wilmington, DE 19809 (US)
(72) Inventor: SOMASUNDARAM, Shankar, London, NW1 6AP (GB); SAMMOUR, Mohammed, Alrabieh, Amman 11110 (JO); TERRY, Stephen, E., Northport, New York 11768 (US); MILLER, James M., Verona, New Jersey 07044 (US)
(74) Representative: Tholén, Johan
(86) International application number: PCT/US2008/061208
(87) International publication number: WO 2008/131401

(56) References cited:
- EP-A- 1 408 658
- WO-A2-2008/087524
- RAJEEV KOODLI CHARLES E PERKINS COMMUNICATION SYSTEMS LABORATORY NOKIA RESEARCH CENTER: "A Context Transfer Protocol for Seamless Mobility draft-koodli-seamoby-ct-04.txt; draft-koodli-seamoby-ct-04.txt" IETF STANDARD-WORKING-DRAFT, INTERNET ENGINEERING TASK FORCE, IETF, CH, no. 4, 30 August 2002 (2002-08-30), XP015004020 ISSN: 0000-0004
- NTT DOCOMO: 'RRC Re-establishment Procedure' 3RD GENERATION PARTNERSHIP PROJECT (3GPP); TECHNICALSPECIFICATION GROUP (TSG) RADIO ACCESS NETWORK (RAN); WORKINGGROUP 2 (WG2), [Online] vol. R2-061928, 27 June 2006, pages 1 - 6, XP002488901 Retrieved from the Internet: <URL:ftp://ftp.3gpp.org/tsg_ran/WG2_RL2/TSG R2_AHs/2006_06_LTE/Docs/R2-0619 28.zip> [retrieved on 2006-06-27]

## Description

### FIELD OF INVENTION

The present invention is related to wireless communication systems.

### BACKGROUND

Internet Engineering Task Force, CH, no. 4, 30 August 2002 (XP015004020 ISSN: 0000-0004) "A Context Transfer Protocol for Seamless Mobility draft-koodli-seamoby-ct-04.txt; draft-koodli-seamoby-ct-04.txt" (Rajeev Koodli et. al.) discloses how to transfer state information (e.g., microflow contexts) between IP access routers in normal handover processing. It is further disclosed that when a mobile node moves from one access router to another, state information such as AAA state, QoS state, and header compression state may be transferred from one access router to the other.

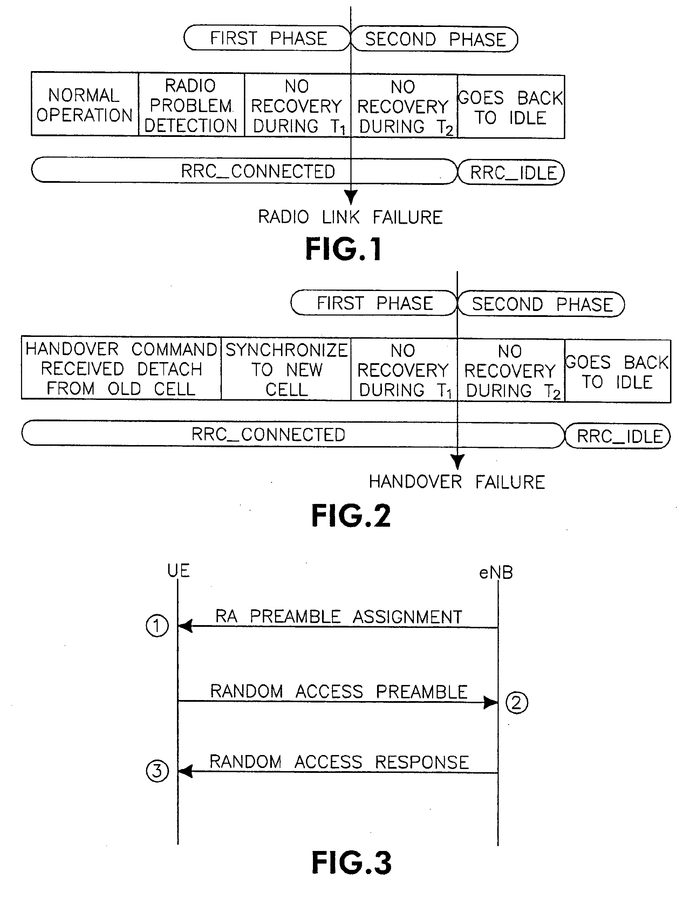

Document XP002488901 is also related to the handling of handover failure. Figure 1 shows how the context of a mobile UE is transferred to the evolved NodeB where the UE is roaming. When the handover between the source eNodeB and the target eNodeB fails, the UE selects another target eNodeB, named the new eNodeB, to which it sends a cell update message including the UE identity and cell identies of the target eNodeB. The new eNodeB then retrieves the context of the UE from the target eNodeB, based on these identities.

In evolved universal terrestrial radio access network (E-UTRAN) Stage 2, the cases where the wireless transmit receive unit (WTRU) selects a cell that belongs to same eNodeB after a radio link (RL) failure are listed as for further study (FFS). It has been proposed that if the WTRU selects a different cell from the same eNodeB, the activity cannot be resumed without interaction between the WTRU and the eNodeB. Currently, radio access network 2 (RAN2) specifies that if the WTRU selects a cell from a different eNodeB, it needs to go via radio resource control (RRC) idle.

Currently, RAN2 decisions on RL failure are determined based on two phases. The two phases govern the behavior associated with RL failure, and are shown in Figure 1.

A first phase starts when a radio problem is detected, which leads to a RL failure detection. As a result, there is no WTRU-based mobility based on a timer or other (e.g., counting) criteria (T₁).

A second phase starts when a radio link failure is detected, which leads to RRC Idle. WTRU-based mobility is still available, which is timer based (T₂).

Table 1 below describes how mobility is currently handled with respect to a RL failure.

**Table 1: Mobility and Radio Link Failure**

| **Cases** | **First Phase** | **Second Phase** | **T2 expired** |
|---|---|---|---|
| UE returns to the same cell | Continue as if no radio problems occurred | Activity cannot be resumed without interaction between UE and eNodeB, Procedure to be used is FFS, Normally not via RRC_IDLE | Go via RRC_IDLE |
| UE selects a different cell from the same eNodeB | N/A | FFS | Go via RRC_IDLE |
| UE selects a cell of a different eNodeB | N/A | Go via RRC_IDLE | Go via RRC_IDLE |

A recent proposal divides handover into two (2) phases similar to RL failure and suggests a similar handover failure handling procedure.

In the first phase, the WTRU tries to synchronize and access the target cell, e.g., during a timer T1. In the second phase, the WTRU has aborted the handover since it failed and tries to re-establish the lost connection to the network, e.g., during a timer T2. After the second phase the UE enters RRC_IDLE.

Figure 2 shows the two phases that govern the behavior associated to handover failure during network controlled mobility in accordance with the current proposal.

The first phase starts upon a first synchronization attempt to a target cell; and leads to a handover failure detection. During this time, there is no WTRU-based mobility, which is based on a timer or other (e.g., counting) criteria (T₁).

The second phase is started upon handover failure detection, which leads to RRC_IDLE. The WTRU-based mobility is still available based on Timer (T₂).

Table 2 describes how mobility is handled with respect to a handover failure.

**Table 2: Mobility and Handover Failure**

| **Cases** | **First Phase** | **Second Phase** | **T2 expired** |
|---|---|---|---|
| UE enters target cell | Continue as if no radio problems occurred | Activity cannot be resumed without interaction between UE and eNodeB, UE performs Random Access Procedure according to 10.1.5 | Go via RRC_IDLE |
| UE returns to source cell | N/A | Activity cannot be resumed without interaction between UE and eNodeB, UE performs Random Access Procedure according to 10.1.5 | Go via RRC_IDLE |
| UE selects a different cell than target or source cell | N/A | Go via RRC_IDLE | Go via RRC_IDLE |

Also, non-contention based random access during handover, is currently allowed to be used. As such, the current non-contention based random access procedure, shown in Figure 3, includes assigning a Random Access Preamble via dedicated signaling in the downlink (DL), wherein the eNodeB assigns to the WTRU a six (6) bit non-contention Random Access Preamble (i.e., a Random Access Preamble that is not within the set broadcasted on BCH). The preamble is signaled via a handover (HO) command generated by a target eNodeB and sent from the source eNodeB for handover, using medium access control (MAC) signaling (e.g., layer 1 (L1)/layer 2 (L2) control channel or MAC control packet data unit (PDU)), in case of DL data arrival.

The WTRU then transmits the assigned non-contention Random Access Preamble on the RACH in the uplink. A Random Access Response from the eNB is sent on DL-SCH. The response is semi-synchronous (within a flexible window of which the size is one or more transmission timing interval (TTI)) with message 1, and is addressed either to C-RNTI or RA-RNTI (FFS) on L1/L2 control channel.

The Random Access Response includes at least timing alignment information and an initial UL grant for handover, and timing alignment information for DL data arrival. Additionally, RA-preamble identifier is addressed to routing area radio network temporary identifier (RA-RNTI) on the L1/L2 control channel.

The response is intended for only one WTRU in one downlink shared channel (DL-SCH) message if it is addressed to cell RNTI (C-RNTI) on the L1/L2 control channel, or one or multiple WTRUs in one DL-SCH message if it is addressed to RA-RNTI on the L1/L2 control channel.

There exists a need for an improved method and apparatus for handling radio link and handover failures.

### SUMMARY

The method and apparatus disclosed are used for handling RL and handover failures based on context transfer details and RACH procedures that enhance the failure handling procedures. After an RL failure, a wireless transmit receive unit (WTRU) includes the identity of an evolved Node-B (eNB) and/or cell as an information element (IE) in an RRC connection request and/or a cell update message or any other RRC message along with a WTRU identity.

### BRIEF DESCRIPTION OF THE DRAWINGS

A more detailed understanding may be had from the following description, given by way of example in conjunction with the accompanying drawings wherein:
Figure 1 shows a conventional radio link failure;
Figure 2 shows a conventional handover failure;
Figure 3 shows a conventional non-contention based random access procedure;
Figure 4 is a diagram of a wireless communication system; and

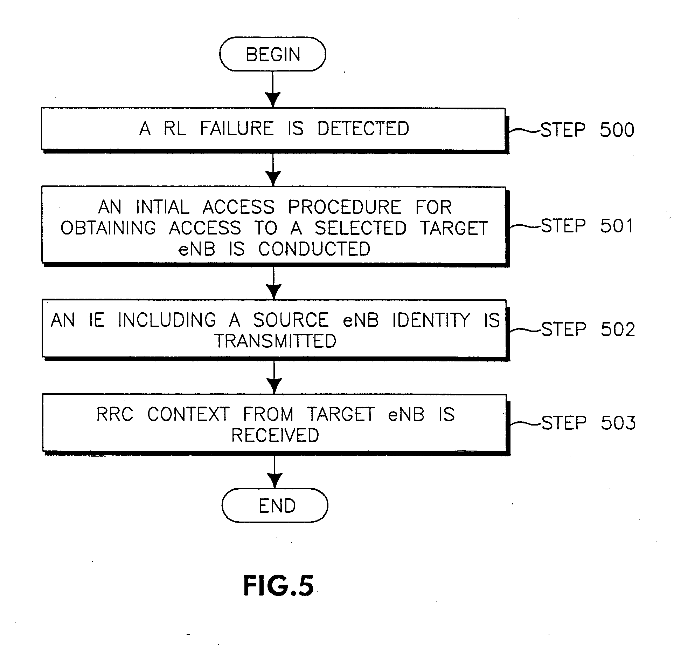

Figure 5 shows a flow diagram of a disclosed method for handling a radio link failure.

### DETAILED DESCRIPTION

When referred to hereafter, the terminology "wireless transmit/receive unit (WTRU)" includes but is not limited to a user equipment (UE), a mobile station, a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

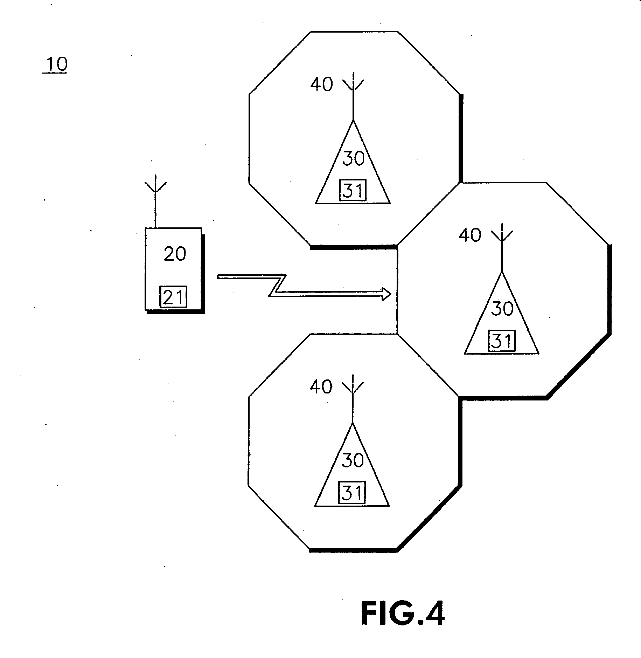

Referring to Figure 4, an LTE wireless communication network (NW) 10, for example, comprises one or more WTRUs 20, each including a processor 21, one or more Node Bs 30, each including a processor 31, and one or more cells 40. Each cell 40 comprises one or more Node Bs (NB or eNB) 30. Processors 21 and 31 are each configured to implement a disclosed method for handling a radio link (RL) and handover failure.

Throughout the disclosed method, context information refers to any of Radio Resource Control (RRC) context, security context, Packet Data Convergence Protocol (PDCP) context, or any layer's context that may be continued during mobility. For the sake of brevity, however, the term context or RRC context may be used for each of the types of context disclosed above.

When an RL failure is detected by the WTRU 20, the WTRU 20 begins mobility procedures, (i.e., cell reselection). In the normal cell reselection procedure, WTRU 20 reselects to any available cell after RL failure, and through a cell update or a radio resource control (RRC) connection request, the WTRU 20 sends its WTRU identity to an eNodeB (eNB) 30. eNB 30, using the received WTRU identity, detects if the WTRU 20 was under the control of this eNB 30 before the radio link failure occurred.

A method and apparatus are disclosed wherein after a Radio Link (RL) or handover (HO) failure, the WTRU 20 includes its WTRU identity (e.g., TMSI/IMSI/IMEI or any other UE identity) and the eNB identity and/or cell identity as an information element (IE) in the RRC connection request, the cell update message or any other RRC message.

Once the WTRU 20 has camped on an eNB (i.e., Target eNB) after cell reselection, the information included in the IE is transmitted to the Target eNB. If the Target eNB on which the WTRU 20 camps is different from the eNB for which the WTRU 20 was camped prior to RL failure (i.e., Source eNB), then the Target eNB contacts the Source eNB, using the eNB identity and/or cell ID included in the IE, to inform the Source eNB of the WTRU's 20 identity. The Target eNB then requests the Source eNB to transmit WTRU's 20 context parameters. Alternatively, the Target eNB may also inform the Source eNB of the cell identity.

If the Source eNB finds context information that matches the identity of WTRU 20, the Source eNB transmits the context information to the Target eNB. The Target eNB can then send a response to the WTRU's 20 cell update, the RRC connection request, or any other WTRU initiated RRC procedure, indicating that WTRU 20 may reuse the previous context.

If the context is not found by the Source eNB, the Target eNB executes cell update/RRC connection establishment procedures, or any other RRC procedure. In this case when the Target eNB receives a request for reestablishing a RRC connection from the WTRU 20, it signals all the Layer 1 and Layer 2/3 parameters as it would have signaled for a new RRC connection. The WTRU 20 may then delete any stored context information that was applicable to the old cell. Alternatively, if the context is not found, the WTRU 20 could go to RRC Idle without waiting for timer T2 to expire, and resume procedures or wait for the timer T2 to expire to go to RRC Idle.

The disclosed IE, comprising information about the eNB on which WTRU 20 had last camped can be included by the WTRU 20. In accordance with this alternative, the processor 21 includes the eNB identity and/or cell identity in the IE only upon detecting a handover failure.

If the Target eNB, on which the WTRU 20 camps, is the same as the Source eNB prior to the failure and if the eNB finds a context for the WTRU 20, (the eNB finds it by checking if it has a context that matches the identity of the WTRU 20), then the eNB on receiving a RRC CONNECTION REQUEST from the WTRU 20 (or on reception of any other WTRU initiated RRC procedures) could indicate to the WTRU 20 to use the same context information that it had before the failure occurred. Otherwise, the eNB could signal all the Layer 1 and Layer 2/3 parameters to WTRU 20, as the eNB would signal for a new RRC connection. WTRU 20 may then delete any stored context information.

A flow diagram of the disclosed method used by processor 21 of WTRU 20 to handle an RL failure is described below. Upon detection of an RL failure (step 500), the WTRU 20 conducts an initial access procedure for obtaining access to a selected Target eNB (step 501). The WTRU 20 then transmits an IE to the Target eNB including at least the eNB ID for a Source eNB on which the WTRU 20 was previously camped (step 502). WTRU 20 then receives the RRC context from the Target eNB (step 503) after the context has been obtained by the Target eNB, for example, from the Source eNB.

In accordance with the disclosed method, the duration of the period that the Target eNB keeps the radio access control (RAC) context is preferably determined on an implementation basis. This is also the case in determining whether the transferring of the context information between the Target eNB and the Source eNB only happens on a radio link failure.

If the Target eNB on which WTRU 20 camps is the same as the Source eNB on which WTRU 20 had camped before handover, then upon receiving a RRC CONNECTION REQUEST from the WTRU 20, or on reception of any other WTRU initiated RRC procedures, could indicate to the WTRU 20 to use the same context information that it had before the failure occurred.

As those having skill in the art would realize, the WTRU 20 camping on the same cell or the same eNB on which it had camped prior to RL failure, helps in saving network resources. As such, the disclosed method may alternatively include that the WTRU 20 during the cell selection procedure after RL failure, take the Source eNB identity into account, thereby preferring cells from the Source eNB over cells from a different eNB. In accordance with this alternative, it may be preferable that the WTRU 20 give priority to a detected eNB in the following order: last cell on which it was previously camped; a cell from the same eNodeB on which it was previously camped; and cell from any other eNodeB.

The other parameters for cell reselection may or may not be considered by the WTRU 20 during a radio link failure situation since quick camping and initiation of the call are the main criteria after failure; having just the eNB identity (or cell identity), along with the cell signal strength is enough for conducting cell selection upon radio link failure. In accordance with this method, the identities (eNB and cell) may be broadcast in the system information messages along with the cell ID.

For a handover failure, a method is disclosed wherein when the WTRU 20 moves to a different cell and the different cell belongs to the same eNB, based on the WTRU 20 identity, the eNB to which the WTRU 20 has moved identifies whether it has the WTRU 20 context. If the eNB has the context, the eNB signals WTRU 20 to use the same context as before. The WTRU 20 is able to use the same context since the context is stored with respect to the eNB and not with respect to the cell. In accordance with this method, the same priority of cell selection described above for an RL failure as disclosed above is applied for eNB handover failures, as an alternative method.

When the WTRU 20 moves to a cell from a different eNB altogether, a similar procedure as disclosed above for a radio link failure can be used. It should be noted that during such a handover procedure the last eNB identity which the WTRU 20 could have stored may be the Source eNB or the Target eNB depending on what stage of the procedure the handover failed. In accordance with this disclosed method, it is preferable that WTRU 20 stores the Source eNB as the last eNB or which it camped until the handover is successfully completed. Also the procedure by itself would not be affected, regardless of whether the WTRU sends the Source eNB or the Target eNB identity to the final eNB on which it camps.

An important aspect of being able to retrieve the context is for the WTRU to camp on a cell and send message 1 (i.e., the Random Access Preamble) in the RACH procedure as soon as possible. If there is a delay in this process, the eNB could have deleted the context, therefore rendering the context retrieval procedure useless. Accordingly, a method for enhancing the Random Access Channel (RACH) procedure is disclosed for RL and handover failures. In accordance with this method, a dedicated signature is allocated to the WTRU 20 during the handover procedure. The allocated dedicated signature is then used for accessing the Source cell following RL or handover failure. For example, the HO Command (or any signaling message) assigns th WTRU 20 two dedicated signatures, one to be used by WTRU 20 to access the target cell, and the other to be used by WTRU 20 to access the source cell (or any other cell) in case failure occurs (e.g., if WTRU 20 did not manage to access the target cell).

If the handover is completed successfully, the WTRU 20 may (implicitly or explicitly) release the signature back to the network in the handover confirm message. In the case of a failure during the handover procedure, the WTRU 20 may use this second dedicated signature and attempt to access the network as soon as possible. Since the WTRU 20 uses a dedicated signature, it is able to recover faster from a failure.

Alternatively, a set of dedicated signatures is broadcast in the broadcast channel (BCH) set exclusively for RL failure, which is used by the WTRU 20 in case of a RL or handover failure. In another alternative, a set of universal dedicated signatures, valid across all cells, may be used for RL failures. This set of universal dedicated signatures may be sent in the handover message, or broadcast in the System information messages. The WTRU may then use this universal dedicated signature after the failure for accessing any cell.

An alternative RACH procedure is disclosed wherein, instead of assigning a dedicated signature to the WTRU 20, which is used in case of failure, at least one of the signatures (e.g., Random Access Preamble) in the current set broadcasted on the BCH may be identified/reserved for accessing the cell following failure. In accordance with this alternative, the WTRU 20 obtains the reserved signatures from the BCH (or the Handover (HO) Command may inform WTRU 20 of the reserved signatures to be used in case of failure). Once the WTRU 20 learns the reserved signatures, the WTRU 20 uses this reserved signature if it experiences a RL or handover failure.

Another alternative is disclosed wherein higher access classes for RL failure handling is used. In accordance with this alternative, the WTRU 20 associates RL failure handling with a higher access class service and hence it would end up reselecting to the network with a lower backoff and a higher priority. In this scenario, when the WTRU 20 tries to access a cell after an RL failure, since the WTRU 20 would have a higher access class service, and therefore would try to access network 10 with lower or no backoff interval between its different RACH attempts. As such, WTRU 20 after an RL failure might have a higher probability of accessing the network as compared to other WTRUs with lower access class service, which would have longer backoff intervals.

In another alternative method for RACH Access, the WTRU 20 ramps up its power faster so that the network has a higher chance of detecting it, and therefore prioritizes the given WTRU 20. Table 3 describes the mobility of the WTRU 20 during a RL failure in accordance with this disclosed method.

**Table 3: Mobility and Radio Link Failure**

| **Cases** | **First Phase** | **Second Phase** | **T2 expired** | **Priority of cell selection** |
|---|---|---|---|---|
| UE returns to the same cell | Continue as if no radio problems occurred | Activity cannot be resumed without interaction between WTRU and eNodeB, Procedure to be used is FFS, Normally not via RRC_IDLE | Go via RRC_IDLE | 1 |
| UE selects a different cell from the same eNodeB | N/A | Activity cannot be resumed without interaction between WTRU and eNodeB | Go via RRC_IDLE | 2 |
| UE selects a cell of a different eNodeB | N/A | Activity cannot be resumed without interaction between WTRU and eNodeB, Procedure to be used is FFS, Normally not via RRC_IDLE | Go via RRC_IDLE | 3 |

For the second phase, in order to resume activity when WTRU 20 returns to the same cell, or when the WTRU 20 selects a different cell from the same eNodeB, or a different eNB, a method is disclosed wherein the WTRU 20 accesses the cell through the random access procedure. The non-access stratum (NAS) identity used in the random access procedure is also used by the eNB to determine whether the eNB has an RRC context stored for that WTRU 20. If the eNB finds an RRC context that matches the identity of WTRU 20, the eNB sends in response to the RRC CONNECTION REQUEST a message (e.g., RRC CONNECTION RESPONSE) or any other WTRU initiated RRC procedures, indicating to the WTRU 20 to reuse the RRC context it has stored.

If the eNB does not find a RRC context that matches the identity of WTRU 20, the new eNB contacts directly the previously camped eNB using the eNB identity transmitted by the WTRU 20. As disclosed above, alternatively, the eNB may derive the WTRU identity or the WTRU context from the Mobile Management Entity (MME).

If a context is found in the old eNB and transferred, it sends in response to the RRC CONNECTION REQUEST a message (e.g., RRC CONNECTION RESPONSE), or any other WTRU initiated RRC procedures, indicating to the WTRU 20 to reuse the RRC context it has stored. If the context is not found either in the new or the old eNB, a RRC connection establishment procedure occurs and the WTRU 20 discards the RRC contexts it has stored. In this case when the network sends a response to the WTRU 20 initiated RRC procedure network 10 indicates whether the WTRU 20 could setup the stack using the old context information it had before the failure, or the network 10 transmits new parameters in the response message for the WTRU 20 to setup its stack. Once the WTRU 20 receives the response message from the network 10 and processes it, the WTRU 20 transmits a complete message to the network 10 indicating to the network 10 that it has finished the configuration on its side.

Table 4 below describes the mobility of the WTRU 20 during a handover failure in accordance with the disclosed method.

**Table 1: Mobility and Handover Failure**

| **Cases** | **First Phase** | **Second Phase** | **T2 expired** | **Priority of cell selection** |
|---|---|---|---|---|
| UE enters target cell | Continue as if no radio problems occurred | Activity cannot be resumed without interaction between UE and eNodeB | Go via RRC_IDLE | 1 |
| UE returns to source cell | N/A | Activity cannot be resumed without interaction between UE and eNodeB | Go via RRC_IDLE | 2 |
| UE selects a different cell from the same eNodeB | N/A | Activity cannot be resumed without interaction between UE and eNodeB, Procedure to be used is FFS, Normally not via RRC_IDLE | Go via RRC_IDLE | 3 |
| UE selects a cell of a different eNodeB | N/A | Activity cannot be resumed without interaction between UE and eNodeB, Procedure to be used is FFS, Normally not via RRC_IDLE | Go via RRC_IDLE | 4 |

For the second phase, in order to resume activity when the WTRU 20 returns to the same cell, or when the WTRU 20 selects a different cell from the same eNB, or a different eNB, a method is disclosed wherein the WTRU 20 accesses the cell through the random access procedure. The non-access stratum (NAS) identity used in the random access procedure is also used by the eNB to determine whether the eNB has an RRC context stored for the WTRU 20. If the eNB finds an RRC context that matches the identity of the WTRU 20, the eNB sends in response to the RRC CONNECTION REQUEST a message (e.g., RRC CONNECTION RESPONSE) or any other WTRU initiated RRC procedures, indicating to the WTRU 20 to reuse the RRC context it has stored.

If the eNB does not find an RRC context that matches the identity of the WTRU 20, the new eNB contacts directly the previously camped eNB using the eNB identity transmitted by the WTRU 20. As disclosed above, alternatively, the eNB may derive the WTRU identity or the WTRU context from the MME.

If a context is found in the old eNB and transferred, it sends in response to the RRC CONNECTION REQUEST a message (e.g., RRC CONNECTION RESPONSE), or any other WTRU initiated RRC procedures, indicating to the WTRU 20 to reuse the RRC context it has stored. If the context is not found either in the new or the old eNB, normal RRC connection establishment procedure occurs and the WTRU 20 preferably discards the RRC contexts it has stored. It should be noted that use of the priority of cell selection column in Tables 3 and 4 is an alternative method and that regardless of the priority the disclosed procedure is still applicable if other priorities for cell selection/reselection are used.

### Embodiments

1. A method for wireless communication implemented in a wireless transmit receive unit (WTRU) comprising:
   detecting a failure including at least one of a radio link (RL) and handover (HO) failure;
   transmitting a wireless transmit receive unit (WTRU) identity and an information element (IE) including at least one of a source Node B identity and source cell identity to access a target Node; and
   receiving a context information from the target Node B based, at least in part, on the IE.
2. The method of embodiment 1 further comprising conducting cell reselection for selecting an available target Node B.
3. The method of any preceding embodiment, wherein the source Node B identity is considered in selecting an available target Node B.
4. The method of any preceding embodiment, wherein the reselecting comprises
   attempting first to reselect to the source Node B; and
   attempting to reselect back to a source cell associated with the source cell identity when the source Node B is not available.
5. The method of embodiment 4 wherein the target Node B and target cell are different than the source Node B and source cell.
6. The method of any preceding embodiment further comprising storing a context information prior to the detected failure.
7. The method as in any of embodiments 1 - 6, wherein the context information includes an indication to use the stored context information.
8. The method as in any of embodiments 1 - 6, wherein the context information includes context information different than the stored context information.
9. The method of any preceding embodiment further comprising accessing a network using at least one of the use of a smaller backoff or a higher ramp up of power.
10. The method of any preceding embodiment further comprising receiving at least one allocated dedicated signature during handover, whereby the dedicated signature is used to access a source cell following a RL or handover failure.
11. The method of embodiment 10 wherein the at least one dedicated signature is received over a handover command.
12. The method of embodiment 10 further comprising receiving the handover command including two assigned dedicated signatures, wherein one of the dedicated signatures is used to access a target Node B, and the other is used to access a source Node B in case a RL or handover failure occurs.
13. The method of embodiment 12 further comprising releasing the two dedicated signatures when the handover is completed.
14. The method of any preceding embodiment wherein the at least one dedicated signature out of a set of signatures is reserved on a broadcast channel for accessing any cell from any Node B following a RL or handover failure.
15. The method of embodiment 14, wherein the set of signatures reserved for dedicated access are received in a handover command.
16. A wireless transmit receive unit comprising a processor configured to implement a method as in any preceding embodiment.
17. A Node B comprising a processor configured to implement a method as in any preceding embodiment.
18. A processor configured to implement a method as in any preceding embodiment.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.

## Claims

1. A method implemented in a wireless transmit receive unit, WTRU, (20) for wireless communications between the WTRU (20) and a target evolved Node B, eNB (30), the method comprising:
detecting a communications failure, wherein the communications failure is a radio link failure or a handover failure;
transmitting a WTRU identity and a source cell identity to the target eNB (30) in response to the detected communications failure; and
receiving a response from the target eNB (30).

2. The method of claim 1, comprising conducting cell reselection for selecting the target eNB (30).

3. The method of claim 2, comprising selecting an eNB (30) as the target eNB (30) wherein the source cell identity is considered.

4. The method of claim 3, wherein the source cell identity is associated with a source cell (40) and a source eNB (30) and conducting cell reselection comprises:
attempting to reselect to the source cell (40); and
attempting to select a second cell (40) associated with the source eNB (30) on a condition that the source cell (40) is not available for selection.

5. The method of claim 4, comprising:
attempting to select a third cell (40) associated with a different eNB (30) on a condition that no cells associated with the source eNB (30) are available for selection.

6. The method of claim 1, comprising storing context information prior to the detected communications failure.

7. The method of claim 1, wherein the communications failure is at least one of a radio link, RL, or a handover, HO, failure.

8. The method of claim 1, wherein the response from the target eNB (30) is based on the WTRU identity matching a context.

9. A wireless transmit receive unit, WTRU, (20) **characterized by**:
a means for detecting a communications failure, wherein the communications failure is a radio link failure or a handover failure;
a means for transmitting a WTRU identity and a source cell identity to a target evolved Node B, eNB, (30) in response to the detected communications failure; and
a means for receiving a response from the target eNB (30).

10. The WTRU (20) of claim 9, wherein the source cell identity is associated with a source eNB (30) on which the WTRU (20) was camped prior to the detected communications failure.

11. The WTRU (20) of claim 9, wherein the communications failure is at least one of a radio link, RL, or a handover, HO, failure.

12. The WTRU (20) of claim 9, further comprising a means for performing cell reselection to select the target eNB (30).

13. The WTRU (20) of claim 9, wherein the source cell identity is considered in selecting an eNB (30) as the target eNB (30).

14. The WTRU (20) of claim 12, wherein the source cell identity is associated with a source cell (40) and a source eNB (30) and the means for performing cell reselection comprises:
a means for attempting to reselect to the source cell (40); and
a means for attempting to select a second cell (40) associated with the source eNB (30) on a condition that the source cell (40) is not available for selection.

15. The WTRU (20) of claim 14, further comprising a means for attempting to select a third cell (40) associated with a different eNB (30) on a condition that no cells associated with the source eNB (30) are available for selection.

16. The WTRU (20) of claim 9, wherein the response from the target eNB (30) is based on the WTRU identity matching a context.

17. The method of claim 1 wherein a communication failure comprises a loss of connection with a network.

18. The WTRU of claim 9 wherein a communication failure comprises a loss of connection with a network.

## Patentansprüche

1. Verfahren, das in einer Drahtlos-Sende- und -Empfangseinheit (Wireless Transmit/Receive Unit, WTRU) (20) implementiert wird, für eine drahtlose Kommunikation zwischen der WTRU (20) und einem Ziel-evolved-NodeB (eNB) (30), wobei das Verfahren Folgendes umfasst:
Detektieren eines Kommunikationsausfalls, wobei der Kommunikationsausfall ein Funkverbindungsausfall oder ein Übergabeausfall ist;
Senden einer WTRU-Identität und einer Quellenzellenidentität an den Ziel-eNB (30) in Reaktion auf den detektierten Kommunikationsausfall; und
Empfangen einer Antwort von dem Ziel-eNB (30).

2. Verfahren nach Anspruch 1, welches das Ausführen einer Zellenneuauswahl für das Auswählen des Ziel-eNB (30) umfasst.

3. Verfahren nach Anspruch 2, welches das Auswählen eines eNB (30) als den Ziel-eNB (30) umfasst, wobei die Quellenzellenidentität berücksichtigt wird.

4. Verfahren nach Anspruch 3, wobei die Quellenzellenidentität mit einer Quellenzelle (40) und einem Quellen-eNB (30) verknüpft ist, und das Ausführen einer Zellenneuauswahl Folgendes umfasst:
Versuchen der Neuauswahl zu der Quellenzelle (40); und
Versuchen der Auswahl einer zweiten Zelle (40), die mit dem QuelleneNB (30) verknüpft ist, unter der Bedingung, dass die Quellenzelle (40) nicht zur Auswahl zur Verfügung steht.

5. Verfahren nach Anspruch 4, das Folgendes umfasst:
Versuchen der Auswahl einer dritten Zelle (40), die mit einem anderen eNB (30) verknüpft ist, unter der Bedingung, dass keine Zellen, die mit dem Quellen-eNB (30) verknüpft sind, zur Auswahl zur Verfügung stehen.

6. Verfahren nach Anspruch 1, das umfasst, vor dem detektierten Kommunikationsausfall Kontextinformationen zu speichern.

7. Verfahren nach Anspruch 1, wobei der Kommunikationsausfall ein Funkverbindungs (Radio Link, RL)- und/oder ein Übergabe (Handover, HO)-Ausfall ist.

8. Verfahren nach Anspruch 1, wobei die Antwort von dem Ziel-eNB (30) darauf basiert, dass die WTRU-Identität mit einem Kontext übereinstimmt.

9. Drahtlos-Sende- und -Empfangseinheit (Wireless Transmit/Receive Unit, WTRU) (20), **gekennzeichnet durch**:
ein Mittel zum Detektieren eines Kommunikationsausfalls, wobei der Kommunikationsausfall ein Funkverbindungsausfall oder ein Übergabeausfall ist;
ein Mittel zum Senden einer WTRU-Identität und einer Quellenzellenidentität an einen Ziel-evolved-NodeB (eNB) (30) in Reaktion auf den detektierten Kommunikationsausfall; und
ein Mittel zum Empfangen einer Antwort von dem Ziel-eNB (30).

10. WTRU (20) nach Anspruch 9, wobei die Quellenzellenidentität mit einem Quellen-eNB (30) verknüpft ist, auf dem die WTRU (20) vor dem detektierten Kommunikationsausfall geparkt war.

11. WTRU (20) nach Anspruch 9, wobei der Kommunikationsausfall wobei der Kommunikationsausfall ein Funkverbindungs (Radio Link, RL)- und/oder ein Übergabe (Handover, HO)-Ausfall ist.

12. WTRU (20) nach Anspruch 9, die des Weiteren ein Mittel zum Ausführen einer Zellenneuauswahl zum Auswählen des Ziel-eNB (30) umfasst.

13. WTRU (20) nach Anspruch 9, wobei die Quellenzellenidentität beim Auswählen eines eNB (30) als den Ziel-eNB (30) berücksichtigt wird.

14. WTRU (20) nach Anspruch 12, wobei die Quellenzellenidentität mit einer Quellenzelle (40) und einem Quellen-eNB (30) verknüpft ist, und das Mittel zum Ausführen einer Zellenneuauswahl Folgendes umfasst:
ein Mittel zum Versuchen einer Neuauswahl zu der Quellenzelle (40); und
ein Mittel zum Versuchen der Auswahl einer zweiten Zelle (40), die mit dem Quellen-eNB (30) verknüpft ist, unter der Bedingung, dass die Quellenzelle (40) nicht zur Auswahl zur Verfügung steht.

15. WTRU (20) nach Anspruch 14, die des Weiteren ein Mittel zum Versuchen der Auswahl einer dritten Zelle (40) umfasst, die mit einem anderen eNB (30) verknüpft ist, unter der Bedingung, dass keine Zellen, die mit dem Quellen-eNB (30) verknüpft sind, zur Auswahl zur Verfügung stehen.

16. WTRU (20) nach Anspruch 9, wobei die Antwort von dem Ziel-eNB (30) darauf basiert, dass die WTRU-Identität mit einem Kontext übereinstimmt.

17. Verfahren nach Anspruch 1, wobei ein Kommunikationsausfall den Verlust der Verbindung mit einem Netzwerk umfasst.

18. WTRU nach Anspruch 9, wobei ein Kommunikationsausfall den Verlust der Verbindung mit einem Netzwerk umfasst.

## Revendications

1. Procédé mis en oeuvre dans une unité émettrice-réceptrice sans fil, WTRU, (20) pour des communications sans fil entre la WTRU (20) et un noeud B évolué, eNB, cible (30), le procédé comprenant :
la détection d'un échec de communication, dans lequel l'échec de communication est un échec de liaison radio ou un échec de transfert intercellulaire ;
la transmission d'une identité de WTRU et d'une identité de cellule source à l'eNB cible (30) en réponse à l'échec de communication détecté ; et
la réception d'une réponse de l'eNB cible (30).

2. Procédé selon la revendication 1, comprenant l'exécution d'une resélection de cellule pour sélectionner l'eNB cible (30).

3. Procédé selon la revendication 2, comprenant la sélection d'un eNB (30) en tant que l'eNB cible (30) dans lequel l'identité de cellule source est prise en compte.

4. Procédé selon la revendication 3, dans lequel l'identité de cellule source est associée à une cellule source (40) et un eNB source (30) et l'exécution de la resélection de cellule comprend :
la tentative de resélectionner la cellule source (40) ; et
la tentative de sélectionner une deuxième cellule (40) associée à l'eNB source (30) à condition que la cellule source (40) ne soit pas disponible pour une sélection.

5. Procédé selon la revendication 4, comprenant :
la tentative de sélectionner une troisième cellule (40) associée à un eNB (30) différent à condition qu'aucune cellule associée à l'eNB source (30) ne soit disponible pour une sélection.

6. Procédé selon la revendication 1, comprenant la mémorisation d'informations contextuelles avant l'échec de communication détecté.

7. Procédé selon la revendication 1, dans lequel l'échec de communication est au moins l'un d'un échec de liaison radio, RL, ou d'un échec de transfert intercellulaire, HO.

8. Procédé selon la revendication 1, dans lequel la réponse de l'eNB cible (30) est basée sur l'identité de la WTRU correspondant à un contexte.

9. Unité émettrice-réceptrice sans fil, WTRU, (20) **caractérisée par** :
un moyen pour effectuer la détection d'un échec de communication, dans laquelle l'échec de communication est un échec de liaison radio ou un échec de transfert intercellulaire ;
un moyen pour effectuer la transmission d'une identité de WTRU et d'une identité de cellule source à un noeud B évolué, eNB, cible (30) en réponse à l'échec de communication détecté ; et
un moyen pour effectuer la réception d'une réponse de l'eNB cible (30).

10. WTRU (20) selon la revendication 9, dans laquelle l'identité de cellule source est associée à un eNB source (30) sur lequel la WTRU (20) se trouvait avant l'échec de communication détecté.

11. WTRU (20) selon la revendication 9, dans laquelle l'échec de communication est au moins l'un d'un échec de liaison radio, RL, ou d'un échec de transfert intercellulaire, HO.

12. WTRU (20) selon la revendication 9, comprenant en outre un moyen pour effectuer une resélection de cellule pour sélectionner l'eNB cible (30).

13. WTRU (20) selon la revendication 9, dans laquelle l'identité de cellule source est prise en compte dans la sélection d'un eNB (30) en tant que l'eNB cible (30).

14. WTRU (20) selon la revendication 12, dans laquelle l'identité de cellule source est associée à une cellule source (40) et un eNB source (30) et le moyen pour effectuer la resélection de cellule comprend :
un moyen pour effectuer la tentative de resélectionner la cellule source (40) ; et
un moyen pour effectuer la tentative de sélectionner une deuxième cellule (40) associée à l'eNB source (30) à condition que la cellule source (40) ne soit pas disponible pour une sélection.

15. WTRU (20) selon la revendication 14, comprenant en outre un moyen pour effectuer la tentative de sélectionner une troisième cellule (40) associée à un eNB (30) différent à condition qu'aucune cellule associée à l'eNB source (30) ne soit disponible pour une sélection.

16. WTRU (20) selon la revendication 9, dans laquelle la réponse de l'eNB cible (30) est basée sur l'identité de la WTRU correspondant à un contexte.

17. Procédé selon la revendication 1, dans lequel un échec de communication comprend une perte de connexion avec un réseau.

18. WTRU selon la revendication 9, dans laquelle un échec de communication comprend une perte de connexion avec un réseau.
